# EUROPEAN PATENT APPLICATION

(11) **EP 2 161 610 A1**
(43) Date of publication of application: **10.03.2010**
(21) Application number: 08740216.0
(22) Date of filing: 04.04.2008
(51) Int. Cl.: G02C 7/12, G02B 5/30, G02C 7/02

(54) **POLARIZING LENS AND METHOD FOR MANUFACTURING THEREOF**

(30) Priority: 22.06.2007 JP 2007164551
(71) Applicant: Daicel-Evonik Ltd., Minato-ku Tokyo 108-8230 (JP)
(72) Inventor: KOMADA, Hajime, Himeji-shi Hyogo 671-1234 (JP); YOSHIMURA, Takashi, Himeji-shi Hyogo 671-1234 (JP)
(74) Representative: Grünecker, Kinkeldey, Stockmair & Schwanhäusser Anwaltssozietät
(86) International application number: PCT/JP2008/057118
(87) International publication number: WO 2009/001603

(57) **Abstract**

The present invention provides a method of producing a polarized lens capable of obtaining a high-quality polarized lens used for sunglasses and the like. More specifically, the present invention is a method of producing a polarized lens, comprising the steps of obtaining a lens made of resin having a polarizing film on a convex surface thereof, masking the convex surface thereof, and dyeing a non-masked surface thereof.

## Description

### Technical Field

The present invention relates to a polarized lens used for sunglasses and the like, and to a production method thereof.

### Background Art

A polarized lens is one that is integrated with a polarizing film, and is used as sunglasses and the like because of the effect of eliminating a dazzling from road surface, water surface, snow surface, etc. and effect of eliminating dazzling light reflected from automobile glasses and window glasses of buildings.

When a polarized lens is dyed in the course of the production, there is employed a method in which a lens is immersed into a dye solution at high temperatures. At this time, defects such as cracks may be caused on a lens surface of the polarizing film due to environmental stress destruction and the like by components of dye solution, to thereby lower its quality.

Lenses made of resin are described in JP-A 6-289328 and JP-A 9-230109.

### Disclosure of the Invention

The present invention provides a polarized lens and a production method thereof which does not cause the lowering of quality and defects in the course of the production.

As means to solve the problem, the present invention provides a polarized lens made of resin, including a polarizing film on a convex surface thereof, wherein the opposite surface thereof is colored with one or two or more colors, and gradation is applied to the colored surface.

In the present invention, "gradation" means that the color concentration is varied continuously or in a stepwise manner, and "gradation is applied" means that the color concentration of a colored surface is varied continuously or in a stepwise manner.

As other means to solve the problem, the present invention provides a method of producing a polarized lens, including steps of obtaining a lens made of resin having a polarizing film on a convex surface thereof, masking the convex surface thereof, and surface-treating a non-masked surface thereof.

According to the present invention, a high-quality polarized lens without defects can be obtained.

### Detailed Description of the Invention

### <Polarized lens made of resin>

The lens made of resin of the present invention is one that has a polarizing film provided on a convex surface thereof and an opposite surface being colored with one or two or more colors, and further gradation is applied to the colored surface. The color of the colored surface is not particularly limited, and can be selected from a desired color as needed. The polarizing film is a film having a polarization function, and may be previously colored.

### <Production process of the polarized lens>

In the first step, a lens made of resin having a polarizing film on a convex surface is obtained. In this step, an insert molding method is preferably employed.

Specifically, in the condition that a polarizing sheet for forming the polarizing film is attached to a given die, by introducing a thermoplastic resin thereto for solidification, a lens having a polarizing film on the convex surface can be obtained.

The polarizing sheet for forming the polarizing film is not particularly limited, and may be optionally selected from commercially available products depending on uses and functions, etc. of polarized lenses to be used. According to the present invention, the polarizing sheet for forming the polarizing film can also be, for example, a polarizing sheet disclosed in WO 2006/040954. The polarizing sheet may be colored.

The size and shape of the lens made of resin can be optionally designed depending on uses, and the lens having a convex surface and concave surface is used.

As the resin as a material of lens there can be used known thermoplastic resins such as ones described in JP-A 6-289328 and the like. Examples of the thermoplastic resins include polycarbonate, polyamide, polyurethane, polyester, cyclic polyolefin, methacrylate resins such as polymethyl methacrylate, polydiallyl glycol carbonates such as polydiethylene glycol bisallylcarbonate, polystyrene, acrylonitrile-styrene copolymer, methyl methacrylate-styrene copolymer, rubber-reinforced methacrylate resin, cellulose esters such as cellulose acetate, polyvinyl chloride, ABS resin, and the like. In addition, a transparent thermosetting resin can be used.

In the next step, the polarizing film side (convex surface side) of the lens is masked. The masking procedure in this step is to protect the polarizing film from the surface-treatment in the next step, and is not particularly limited as long as the aim of the protection can be accomplished.

As the masking method, there can be optionally employed a method selected from those described in JP-A 6-289328, for example, a masking film method, pressure-adhesion rubber sealing method, a method of forming a protective coat, a method for sticking adhesion tape, and the like.

In the next step, the non-masked surface of the lens is surface-treated. The surface-treatment is optionally depending on uses and functions of the polarized lens. Examples include a dyeing treatment for applying one or two or more colors, a non-glare treatment for imparting an antireflective function, a stain prevention treatment, a vapor deposition treatment for forming metal layer such as aluminum, and the like.

As the dyeing treatment, there is employed a method in which the masking-treated lens is immersed into a dye solution. When dyeing with two or more colors, plural dyeing treatments are carried out by changing colors. For example, when a color of the polarizing film is yellow-based, there can be employed a method in which the non-masked surface of the lens is dyed with blue-based colors.

When producing the polarized lens made of resin having gradation on the colored surface thereof, in the surface-treatment step, the non-masked surface is dyed so as to apply gradation. Dyeing method for applying gradation is not particularly limited, and can be employed, for example, the following (I) to (III) methods, or optionally modified methods thereof. Moreover, the aforementioned dyeing of plural colors and the treatment for applying gradations can be carried out at the same time.
(I) A method in which after immersing a lens into a dye solution completely, the lens is pulled out gradually at a constant rate to give continuous color tone to the lens from one end (portion being at the side closest to the dye solution surface and being pulled out firstly) to the opposite end (portion being at the side farthest away from the dye solution surface and being pulled out finally).
(II) A method in which in the aforementioned method (I), the lens is pulled out in a stepwise manner (for instance, by 1/10 of the whole) from one end to the opposite end to thereby give several divided color tone.
(III) Method in which after the completion of dyeing of the whole lens, the aforementioned method (I) or (II) are performed again to give color tone.

Subsequently, as needed, after carrying out drying, the desired polarized lens can be obtained by removing the mask. Further, as needed, the both surfaces thereof may be subjected to hard coat treatment, waterproof treatment, and the like. The polarized lens obtained according to the production method of the present invention is suitable for sunglasses, glasses or goggles.

### Examples

### Example 1

### (First Step)

A polarizing sheet (one that is obtained by sandwiching a polarizing film with polycarbonate sheets on the both sides, having a thickness of 0.7 mm) was stamped out in the form of a lens, and then performed by heat-treatment so as to match a desired curvature of a concave and convex lens.

The obtained polarizing sheet was attached to a die of an injection molding machine (Sodic Plastech, Tuparl TR150S) so as to be positioned on a convex side of the die, and an insert molding was conducted by injecting polycarbonate to obtain a lens having a polarizing film on the convex surface. A die temperature was 90°C, and a resin temperature was about 290°C.

### (Second Step)

To the polarizing film side (convex surface side) of the lens obtained in First Step, an olefin-based masking film (VIGteQnos Co., Ltd., #3060) was attached.

### (Third Step)

The lens having the masking film on the polarizing film side (convex surface side) was immersed into a dye solution (85°C) of the following formulation for 10 minutes, pulled out, and then dried naturally as it was. After that, by pealing off the masking film, a polarized lens having the polarizing film on the convex surface and being dyed only on the concave surface was obtained. By observation with naked eyes, there were no defects found in terms of the obtained polarized lens.

| (Formulation of dye solution) | |
|---|---|
| (1) Dyeing aid | |
| Mixture of "TOHO SALTS" and "CARRYANT" produced by TOHO Chemical Industry Co., LTD. | 1.50 % by mass |

| (2) Dye | |
|---|---|
| Anthraquinone-type disperse dye (pink) | 0.04 % by mass |
| Anthraquinone-type disperse dye (blue) | 0.01 % by mass |

| (3) Pure water | 98.46 % by mass |
|---|---|
| | 100.00 % by mass |

### Comparative Example 1

The same procedures as those in Example 1 were repeated except that masking procedures were not carried out in Second Step, to thereby obtain a polarized lens. It was observed that the obtained polarized lens had a small crack, distortion and the like on the surface of the convex.

### Example 2

The same procedures as those in Example 1 were repeated except that a polarized lens was dyed on the colored surface in Third Step of Example 1 according to the Method (I) so as to have gradation to thereby obtain a polarized lens which was dyed only on the concave surface. In terms of the obtained polarized lens, there were no defects found as a result of observation with naked eyes.

## Claims

1. A polarized lens made of resin, comprising a polarizing film on a convex surface thereof, wherein the opposite surface thereof is colored with one or two or more colors, and gradation is applied to the colored surface.

2. A method of producing a polarized lens, comprising the steps of obtaining a lens made of resin having a polarizing film on a convex surface thereof, masking the convex surface thereof, and surface-treating a non-masked surface thereof.

3. The method of producing a polarized lens of Claim 2, wherein the step of obtaining a lens made of resin having a polarizing film on a convex surface thereof is a step of applying an insert molding.

4. The method of producing a polarized lens of Claim 2 or 3, wherein the masking step is a step of covering the convex surface thereof with a plastic film.

5. The method of producing a polarized lens of any one of Claims 2 to 4, wherein the surface-treatment step is a dyeing step for coloring with one or two or more colors.

6. The method of producing a polarized lens of Claim 5, wherein the dyeing step is a step for dyeing so as to apply gradation to the non-masked surface.

7. The method of producing a polarized lens of Claim 5, wherein the dyeing step is a step for dyeing so as to apply gradation to the non-masked surface, and dyeing with a plurality of colors.

8. The method of producing a polarized lens of any one of Claims 2 to 7, wherein the polarized lens is a lens for sunglasses, glasses or goggles.
